Europäisches Patentamt

European Patent Office

Office européen des brevets

(11) Veröffentlichungsnummer: **0 439 792 B1**

# EUROPÄISCHE PATENTSCHRIFT

(45) Veröffentlichungstag der Patentschrift: **27.07.94**

(51) Int. Cl.5: **C08G 18/76**, C07C 265/14

(21) Anmeldenummer: **90124866.6**

(22) Anmeldetag: **20.12.90**

Die Akte enthält technische Angaben, die nach dem Eingang der Anmeldung eingereicht wurden und die nicht in dieser Patentschrift enthalten sind.

(54) **Neue Polyisocyanatmischungen und ihre Verwendung bei der Herstellung von weichen Polyurethan-Schaumstoffen.**

(30) Priorität: **20.01.90 DE 4001556**

(43) Veröffentlichungstag der Anmeldung:
**07.08.91 Patentblatt 91/32**

(45) Bekanntmachung des Hinweises auf die Patenterteilung:
**27.07.94 Patentblatt 94/30**

(84) Benannte Vertragsstaaten:
**BE DE ES FR GB IT SE**

(56) Entgegenhaltungen:
EP-A- 0 220 000          EP-A- 0 344 551
EP-A- 0 422 471          FR-A- 2 264 830
FR-A- 2 368 506          US-A- 3 492 251

Developments in Polyurethane -1, J.M. Bust (Herausgeber), Applied Science Publishers Ltd., London 1981, Seiten 84 und 85

(73) Patentinhaber: **BAYER AG**

**D-51368 Leverkusen(DE)**

(72) Erfinder: **Gansen, Peter, Dr.**
**Roggendorfstrasse 57**
**W-5000 Köln 80(DE)**
Erfinder: **Kogelnik, Hans-Joachim, Dr.**
**1247 Rolling Meadow Road**
**Pittsburgh, PA 15241(US)**

**Beschreibung**

In der DE-OS 2 221 811 wird die Herstellung eines Polyurethan-Weichform`schaumstoffs unter Verwendung einer Mischung aus 60 Gew.- Teilen Toluylendiisocyanat (TDI) und 40 Gew.-Teilen einer Mischung aus Diphenylmethan-diisocyanaten und Polyphenyl-polymethylen-polyisocyanaten (Roh-MDI) (NCO-Gehalt 31 %) beschrieben. Der entstehende weiche Formschaumstoff zeichnet sich insbesondere durch günstige Brandschutzeigenschaften aus; allerdings entspricht das mechanische Werteniveau nicht dem heute üblichen Standard.

Ferner wird in der DE-PS 1 243 865 die Herstellung von Polyurethan-Schaumstoffen unter Verwendung von TDI/MDI-Gemischen mit MDI-Konzentrationen zwischen 10 und 90 Gew.-% beschrieben. Das eingesetzte Roh-MDI hat einen Anteil von monomeren Isomeren von 40 - 60 Gew.-% bei geringen 2,4'-Isomerenkonzentrationen. Diese Polyisocyanate finden zwar verbreitet Anwendung in der Automobil-und Möbelindustrie; die Bruchdehnungswerte der aus diesen Polyisocyanaten hergestellten Polyurethan-Schaumstoffe sind allerdings oft unzureichend, so daß gängige Automobilspezifikationen nicht erfüllt werden.

Aus der EP-A-344 551 ist ein Verfahren zur Herstellung von Polyurethan-Weichschaumstoffen unter Verwendung von Semipräpolymeren auf Basis von Polyisocyanaten vom Typ des Diphenylmethandiisocyanats (ohne Mitverwendung von Toluylen-diisocyanat) bekannt.

In "Developments in Polyurethane-1", J.M. Buist (Herausgeber), Applied Science Publishers Ltd., London 1981, Seiten 84-85, wird erwähnt, daß Mischungen von TDI und polymerem MDI zur Herstellung von kalthärtendem Weichschaum eingesetzt werden.

Beide Dokumente offenbaren indessen weder die erfindungsgemäße spezielle Polyisocyanatmischung, noch ihre Verwendung zur Herstellung von kalthärtenden Weichformschaumstoffen.

Überraschendweise wurde nun gefunden, daß bei Einsatz spezieller TDI/MDI-Mischungen deutliche Verbesserungen in den Zugeigenschaften von kalthärtenden Polyurethan-Weichschaumstoffen erzielt werden können. Diese neuen TDI/MDI-Gemische unterscheiden sich von den bisher bekannten durch den relativ hohen Gehalt an monomeren MDI-Isomeren, insbesondere an 2,4' MDI.

Gegenstand der Erfindung ist eine Polyisocyanatmischung, bestehend aus

A) 21 - 95 Gew.-% Toluylendiisocyanat und

B) 5 - 79 Gew.-% eines Gemischs aus Diphenylmethandiisocyanaten und Polyphenyl-polymethylen-polyisocyanaten, bestehend aus

    1.) 60 - 75 Gew.% 4,4'-Diphenylmethan-diisocyanat

    2.) 10 - 25 Gew.-% 2,4'-Diphenylmethan-diisocyanat

    3.) 1 - 3 Gew.-% 2,2'-Diphenylmethan-diisocyanat und

    4.) 10 - 30 Gew.-% Polyphenyl-polymethylen-polyisocyanaten.

Gegenstand der Erfindung ist ferner ein Verfahren zur Herstellung von kalthärtenden Polyurethan-Weichschaumstoffen durch Umsetzung von

a) Polyisocyanaten mit

b) Verbindungen mit mindestens zwei gegenüber Isocyanaten aktiven Wasserstoffatomen vom Molekulargewicht 400 - 10 000 und

c) Wasser als Treibmittel, gegebenenfalls in Gegenwart von

d) Kettenverlängerungs- und Vernetzungsmitteln mit mindestens zwei gegenüber Isocyanaten aktiven Wasserstoffatomen von Molekulargewicht 32 - 399, sowie gegebenenfalls in Gegenwart von

e) anderen Treibmitteln, Katalysatoren und weiteren an sich bekannten Hilfs- und Zusatzmitteln in einer geschlossenen Form, dadurch gekennzeichnet,

daß als Polyisocyanate a) eine Polyisocyanatmischung, bestehend aus

A) 21 - 95 Gew.-% Toluylendiisocyanat und

B) 5 - 79 Gew.-% eines Gemisches aus Diphenylmethandiisocyanaten und Polyphenyl-polymethylen-polyisocyanaten, bestehend aus

    a) 60 - 75 Gew.-% 4,4'-Diphenylmethan-diisocyanat

    b) 10 - 25 Gew.-% 2,4'-Diphenylmethan-diisocyanat

    c) 1 - 3 Gew.-% 2,2'-Diphenylmethan-diisocyanat und

    d) 10 - 30 Gew.-% Polyphenyl-polymethylen-polyisocyanaten

verwendet wird.

Zur Herstellung der Polyurethan-Weichschaumstoffe werden erfindungsgemäß als Ausgangskomponenten verwendet:

a) Die oben genannte Polyisocyanat-Mischung aus A) Toluylendiisocyanat und B) Diphenylmethandiisocyanaten und Polyphenyl-polymethylen-polyisocyanaten.

Als Toluylendiisocyanat kommen 2,4- und 2,6-Toluylendiisocyanat sowie beliebige Gemische dieser Isomeren in Frage. Ferner kommen vorzugsweise folgende TDI-Typen erfindungsgemäß in Betracht:
- Toluylendiisocyanat als Gemisch der 2,4- und 2,6-Isomeren im Verhältnis 80:20 (TDI 80)
- Toluylendiisocyanat als Gemisch der 2,4- und 2,6- Isomeren im Verhältnis 65:35 (TDI 65).

b) Verbindungen mit mindestens zwei gegenüber Isocyanaten reaktionsfähigen Wasserstoffatomen von einem Molekulargewicht von 400-10 000. Hierunter versteht man neben Aminogruppen,Thiolgruppen oder Carboxylgruppen aufweisenden Verbindungen vorzugsweise Hydroxylgruppen aufweisende Verbindungen, insbesondere zwei bis acht Hydroxylgruppen aufweisende Verbindungen, speziell solche vom Molekulargewicht 1000 bis 8000, vorzugsweise 2000 bis 6000, z.B., mindestens zwei, in der Regel zwei bis acht,

vorzugsweise aber 2 bis 6, Hydroxylgruppen aufweisende Polyether, Polyester, Polycarbonate und Polyesteramide, wie sie für die Herstellung von homogenen und von zellförmigen Polyurethanen an sich bekannt sind und wie sie z.B., in der DE-OS 2 832 253, Seiten 11-18, beschrieben werden. Vorzugsweise weisen sie eine OH-Zahl von 28 bis 56 auf.

c) Gegebenenfalls Verbindungen mit mindestens zwei gegenüber Isocyanaten reaktionfähigen Wasserstoffatomen und einem Molekulargewicht von 32 bis 399. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in der DE-OS 28 32 253, Seiten 10-20, beschrieben.

d) Wasser als Treibmittel, vorzugsweise in einer Menge von 5 bis 15 Gew.-Teilen pro 100 Gew.-Teile "Polyolkomponente" b).

e) Gegebenenfalls Hilfs- und Zusatzmittel wie
a) weitere Treibmittel, z.B. leicht flüchtige organische Substanzen,
b) Reaktionsbeschleuniger und Reaktionsverzögerer der an sich bekannten Art in den an sich Üblichen Mengen,
c) oberflächenaktive Zusatzstoffe, wie Emulgatoren und Schaumstabilisatoren, ferner Zellregler der an sich bekannten Art wie Paraffine oder Fettalkohole oder Dimethylpolysiloxane sowie Pigmente oder Farbstoffe und Flammschutzmittel der an sich bekannten Art, z.B. Trischlorethylphosphat, Trikresylphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide.

Diese gegebenenfalls mitzuverwendenden Hilfs- und Zusatzstoffe werden beispielsweise in der DE-OS 27 32 292, Seiten 21-24, beschrieben.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den Seiten 103-113, beschrieben.

Zur Durchführung des erfindungsgemäßen Verfahren werden die Reaktionskomponenten nach dem an sich bekannten Einstufenverfahren, dem Präpolymerverfahren oder dem Semipräpolymerverfahren zur Umsetzung gebracht, wobei man sich oft maschineller Einrichtungen bedient, z.B. solcher, die in der US-Patentschrift 2 764 565 beschrieben werden. Einzelheiten über Verarbeitungseinrichtungen, die auch erfindungsgemäß infrage kommen, werden im Kunststoff-Handbuch, Band VII, herausgegeben von Vieweg und Höchtlen, Carl-Hanser-Verlag, München 1966, z.B. auf den Seiten 121-205, beschrieben.

Die Umsetzung aller Komponenten erfolgt erfindungsgemäß in der Regel bei einer Kennzahl von 90-115, vorzugsweise bei einer Kennzahl von 95-105.

Die Kennzahl, ein bei der Herstellung von Polyurethanschaumstoffen sehr häufig verwendeter Begriff, sagt etwas über den Vernetzungsgrad eines Schaumstoffs aus. Es ist Gepflogenheit, denjenigen Schaumstoff als mit der Kennzahl 100 gefertigt zu betrachten, bei welchem die den stöchiometrischen Verhältnissen entsprechende, bzw. die theoretisch notwendige Menge an Isocyanat benutzt wurde. Mit Hilfe der Kennzahl ist es also möglich, den Grad der Unter- oder Übervernetzung näher zu definieren. Die Kennzahl errechnet sich nach der allgemeinen Formel wie folgt:

$$\text{Kennzahl} = \frac{\text{Isocyanatmenge (praktisch)}}{\text{Isocyanatmenge (theoretisch)}} \times 100$$

Erfindungsgemäß wird die Verschäumung oft mit Vorteil nach dem Kaltschäumverfahren in geschlossenen Formen durchgeführt. Dabei wird das Reaktionsgemisch in eine Form eingetragen. Als Formmaterial kommt Metall, z.B. Aluminium oder Kunststoff, z.B. Epoxidharz, infrage. In der Form schäumt das schäumfähige Reaktionsgemisch auf und bildet den Formkörper. Erfindungsgemäß kann man in diesem Zusammenhang so vorgehen, daß man in die Form so viel schaumfähiges Reaktionsgemisch einträgt, daß der gebildete Schaumstoff die Form gerade ausfüllt. Man kann aber auch so arbeiten, daß man mehr schaumfähiges Reaktionsgemisch in die Form einträgt, als zur Auffüllung des Forminneren mit Schaumstoff notwendig ist. Im letztgenannten Fall wird somit unter "overcharging" gearbeitet; eine derartige Verfahrensweise ist z.B. aus den US-Patentschriften 3 178 490 und 3 182 104 bekannte

Die erfindungsgemäß erhältlichen weichen Polyurethan-Schaumstoffe finden z.B. Anwendung als Armaturentafeln, Armlehnen (auch PKW-Lehnen), Polster für Liege- und Sitzmöbel, Kopfstützen, Sitze in Verkehrsmitteln, vorzugsweise im Auto.

Ausführungsbeispiele

Beispiel 1:

Herstellung eines Polyurethan-Weichschaumstoffes

A-Komponente (Polyol-Formulierung)

70 Gew. Tle. eines Polyetherpolyols der OH-Zahl 28, hergestellt durch Propoxylierung von Trimethylolpropan und anschließende Ethoxylierung
30 Gew. Tle. eines mit einem Polyhydrazodicarbonamid gefüllten Polyetherpolyols der OH-Zahl 28 (Bayfit[®] 3619 der Bayer AG)
3,6 Gew. Tle. Wasser
0,1 Gew. Tle. Bis(dimethylaminoethyl)ether
0,25 Gew. Tle. einer 33 %igen Lösung von Diazabicyclo-(2,2,2)-octan in Dipropylenglykol
0,25 Gew. Tle. N,N-Bis(dimethylaminopropyl)formamid
0,2 Gew. Tle. eines handelsüblichen Vernetzers auf Basis aliphatischer Polyamine (PU-Vernetzer 56 der Bayer AG)
1,5 Gew. Tle. eines handelsüblichen Silicon-Stabilisators (KS 43 der Bayer AG)

B Komponente (Polyisocyanatmischung)

Abmischung aus 70 Gew.-% TDI 65 und 30 Gew.-% eines Roh-MDI's folgender Zusammensetzung:
60 Gew.-% 4,4' Diphenylmethan-diisocyanat
23 Gew.-% 2,4' Diphenylmethan-diisocyanat
2 Gew.-% 2,2' Diphenylmethan-diisocyanat
und
15 Gew.-% Polyphenyl-polymethylen-polyisocyanate
100 Gew. Tle. der A-Komponente werden mit
38,2 Gew. Tle. der B-Komponente auf einer Hochdruckmaschine vermischt.

Das Reaktionsgemisch wird in eine 40 Liter Kastenform eingetragen, die auf etwa 50°C angewärmt ist Die Form wird geschlossen und das Formteil nach etwa 6 Minuten aus der Form genommen. Das Füllgewicht beträgt 1,87 kg. Es ergeben sich folgende Eigenschaftsweite bei der mechanischen Prüfung des erhaltenen Weichschaumstoffs:

Prüfergebnisse:

| Rohdichte (kg/m$^3$) | DIN 53 420 | 43,1 |
|---|---|---|
| Stauchhärte 40 % (kPa) | DIN 53 577 | 4,1 |
| Zugfestigkeit (kPa) | DIN 53 571 | 194 |
| Bruchdehnung (%) | DIN 53 571 | 183 |
| Druckverformungsrest (%) | DIN 53 572 | 6,1 |
| 50 % C$_t$-Wert | | |

Beispiel 2: (Vergleich)

Herstellung eines Polyurethan-Weichformschaumstoffes.

A-Komponente

identisch mit Beispiel 1

B-Komponente

Abmischung aus 70 Gew.-% TDI 65 und 30 Gew.-% eines Gemisches aus Diphenylmethan-diisocyanaten und Polyphenyl-polymethylen-polyisocyanaten der Zusammensetzung:
50 Gew.-% 4,4'-Diphenylmethan-diisocyanat
3 Gew.-% 2,4'-Diphenylmethan-diisocyanat
sowie 47 Gew.-% Polyphenyl-polymethylen-polyisocyanate
Das Mischungsverhältnis und die Herstellungsbedingungen entsprechen dem Beispiel 1. Der resultierende PUR-Schaumstoff hat das folgende Eigenschaftsniveau;

Prüfungsergebnisse:

| Rohdichte (kg/m$^3$) | DIN 53 420 | 42,6 |
|---|---|---|
| Stauchhärte 40 % (kPa) | DIN 53 577 | 3,6 |
| Zugfestigkeit (kPa) | DIN 53 571 | 144 |
| Bruchdehnung (%) | DIN 53 571 | 129 |
| Druckverformungsrest (%) | DIN 53 572 | 5,1 |
| 50 % C$_t$-Wert | | |

Der Vergleich der beiden Beispiele zeigt deutlich, daß die Zugeigenschaften des aus dem erfindungsgemäßen Polyisocyanatgemisch erhaltenen Schaumstoffs deutlich verbessert sind.

**Patentansprüche**

1. Verfahren zur Herstellung von kalthärtenden Polyurethan-Weichschaumstoffen durch Umsetzung von
   a) Polyisocyanaten mit
   b) Verbindungen mit mindestens zwei gegenüber Isocyanaten aktiven Wasserstoffatomen vom Molekulargewicht 400 - 10 000 und
   c) Wasser als Treibmittel, gegebenenfalls in Gegenwart von
   d) Kettenverlängerungs- und Vernetzungsmitteln mit mindestens zwei gegenüber Isocyanaten aktiven Wasserstoffatomen vom Molekulargewicht 32 - 399 sowie gegebenenfalls in Gegenwart von
   e) anderen Treibmitteln, Katalysatoren und weiteren an sich bekannten Hilfs- und Zusatzmitteln in einer geschlossenen Form,
   dadurch gekennzeichnet,
   daß als Polyisocyanate a) eine Polyisocyanatmischung, bestehend aus

A) 21 - 95 Gew.-% Toluylendiisocyanat und

B) 5 - 79 Gew.-% eines Gemisches aus Diphenylmethandiisocyanaten und Polyphenyl-polymethylenpolyisocyanaten, bestehend aus

a) 60 - 75 Gew.-% 4,4'-Diphenylmethan-diisocyanat

b) 10 - 25 Gew.-% 2,4'-Diphenylmethan-diisocyanat

c) 1 - 3 Gew.-% 2,2'-Diphenylmethan-diisocyanat und

d) 10 - 30 Gew.-% Polyphenyl-polymethylen-polyisocyanaten

verwendet wird.

2. Polyisocyanatmischung, bestehend aus

A) 21 - 95 Gew.-% Toluylendiisocyanat und

B) 5 - 79 Gew.-% eines Gemisches aus Diphenylmethandiisocyanaten und Polyphenyl-polmethylen-polyisocyanaten, bestehend aus

1.) 60 - 75 Gew.-% 4,4'-Diphenylmethan-diisocyanat

2.) 10 - 25 Gew.-% 2,4'-Diphenylmethan-diisocyanat

3.) 1 - 3 Gew.-% 2,2'-Diphenylmethan-diisocyanat und

4.) 10 - 30 Gew.-% Polyphenyl-polymethylen-polyisocyanaten.

## Claims

1. A process for the production of cold-curing flexible polyurethane foams by reaction of

a) polyisocyanates with

b) compounds containing at least two isocyanate-reactive hydrogen atoms and having a molecular weight in the range from 400 to 10,000 and

c) water as blowing agent, optionally in the presence of

d) chain-extending agents and crosslinking agents containing at least two isocyanate-reactive hydrogen atoms and having a molecular weight in the range from 32 to 399 and optionally in the presence of

e) other blowing agents, catalysts and other auxiliaries and additives known per se,

characterized in that a polyisocyanate mixture consisting of

A) 21 to 95% by weight of tolylene diisocyanate and

B) 5 to 79% by weight of a mixture of diphenyl methane diisocyanates and polyphenyl polymethylene polyisocyanates consisting of

1.) 60 to 75% by weight of 4,4'-diphenyl methane diisocyanate

2.) 10 to 25% by weight of 2,4'-diphenyl methane diisocyanate

3.) 1 to 3% by weight of 2,2'-diphenyl methane diisocyanate and

4.) 10 to 30% by weight of polyphenyl polymethylene polyisocyanates

is used as the polyisocyanate component a).

2. A polyisocyanate mixture consisting of

A) 21 to 95% by weight of tolylene diisocyanate and

B) 5 to 79% by weight of a mixture of diphenyl methane diisocyanates and polyphenyl polymethylene polyisocyanates consisting of

1.) 60 to 75% by weight of 4,4'-diphenyl methane diisocyanate

2.) 10 to 25% by weight of 2,4'-diphenyl methane diisocyanate

3.) 1 to 3% by weight of 2,2'-diphenyl methane diisocyanate and

4.) 10 to 30% by weight of polyphenyl polymethylene polyisocyanates.

## Revendications

1. Procédé de préparation de mousses souples de polyuréthannes durcissant à froid par réaction de

a) des polyisocyanates avec

b) des composés à au moins 2 atomes d'hydrogène réactifs avec les isocyanates, de poids moléculaire 400 à 10 000, et

c) de l'eau servant d'agent porogène, éventuellement en présence de :

d) des agents d'allongement des chaînes et agents réticulants à au moins 2 atomes d'hydrogène réactifs avec les isocyanates, de poids moléculaire 32 à 399, et le cas échéant en présence de :

e) d'autres agents porogènes, des catalyseurs et d'autres produits auxiliaires et additifs connus en soi, dans un moule fermé,

caractérisé en ce que l'on utilise en tant que polyisocyanate a) un mélange de polyisicyanates consistant en :

A) 21 à 95% en poids de toluylène-diisocyanate, et

B) 5 à 79% en poids d'un mélange de diphénylméthane-diisocyanates et de polyphényl-polyméthylène-polyisocyanates, consistant lui-même en :

    a) 60 à 75% en poids de 4,4'-diphénylméthane-diisocyanate

    b) 10 à 25% en poids de 2,4'-diphénylméthane-diisocyanate

    c) 1 à 3% en poids de 2,2'-diphénylméthane-diisocyanate, et

    d) 10 à 30% en poids de polyphényl-polyméthylène-polyisocyanates.

2. Mélange de polyisocianates consistant en

    A) 21 à 95% en poids de toluylène-diisocyanate, et

    B) 5 à 79% en poids d'un mélange de diphénylméthane-diisocyanates et de polyphényl-polyméthylène-polyisocyanates consistant lui-même en :

        1) 60 à 75% en poids de 4,4'-diphénylméthane-diisocyanate

        2) 10 à 25% en poids de 2,4'-diphénylméthane-diisocyanate

        3) 1 à 3% en poids de 2,2'-diphénylméthane-diisocyanate, et

        4) 10 à 30% en poids de polyphényl-polyméthylène-polyisocyanates.